# FASCICULE DE BREVET EUROPEEN

(11) **EP 2 147 780 B1**
(45) Date de publication et mention de la délivrance du brevet: **07.09.2011**
(21) Numéro de dépôt: 09290570.2
(22) Date de dépôt: 17.07.2009
(51) Int. Cl.: B32B 1/08, B32B 27/08, B32B 27/12, F02M 35/10, F16L 11/08, F16L 11/112

(54) **Structure multicouches, telle qu'un raccord de découplage pour système d'admission d'air de turbocompresseur, et ce système**
Mehrschichtenstruktur, wie beispielsweise Entkoppelungsabschluss für Lufteinlasssystem eines Turbokompressors, und dieses System
Multi-layer structure, such as uncoupling joint for a turbocharger air intake system, and said system

(30) Priorité: 25.07.2008 FR 0804263
(43) Date de publication de la demande: 27.01.2010
(73) Titulaire: Hutchinson, 75008 Paris (FR)
(72) Inventeur: Fromont, Yann, 45120 Cepoy (FR); Le Rossignol, Benoit, 45800 St Jean de Braye (FR)
(74) Mandataire: Bolinches, Michel Jean-Marie

(56) Documents cités:
- EP-A- 0 769 520
- EP-A- 0 769 521
- EP-A- 0 947 757
- EP-A- 1 632 526
- EP-A- 1 852 245
- EP-A1- 1 396 670
- DATABASE WPI Week 198930 Thomson Scientific, London, GB; AN 1989-215701 XP002513379 & JP 01 152060 A (JAPAN SYNTHETIC RUBBER CO LTD) 14 juin 1989 (1989-06-14)

## Description

La présente invention concerne une structure multicouches qui est apte à former un raccord souple de découplage pour système d'admission d'air dans un moteur thermique à turbocompresseur de véhicule automobile. L'invention concerne également un tel système d'admission d'air incorporant cette structure multicouches.

De manière connue, dans une ligne d'admission d'air d'un moteur turbocompressé, le turbocompresseur est relié en sortie au collecteur d'admission d'air du moteur avec interposition d'un échangeur air/air formant un refroidisseur d'air de suralimentation (RAS en abrégé). Parmi les problèmes rencontrés dans une telle ligne admission d'air, il y a notamment celui du découplage qu'il faut assurer entre le turbocompresseur qui est fixé au moteur et ce refroidisseur d'air qui est fixé au châssis du moteur.

Pour résoudre ce problème, on utilise un raccord souple généralement constitué d'une structure tubulaire multicouches présentant deux parties d'extrémité de raccordement et une partie centrale qui est ondulée à la manière d'un soufflet ou bien coudée et qui comprend au moins :
- une couche radialement interne étanche et résistante à l'agressivité du fluide transporté qui est de l'air chargé d'huile,
- une structure intermédiaire de renforcement comprenant usuellement un renfort textile, et
- une couche radialement externe résistant à l'environnement extérieur dans lequel se situe ce raccord.

D'une manière générale, les constructeurs automobiles imposent notamment que ces raccords puissent supporter une température d'utilisation supérieure à 200° C et l'ensemble des débattements du moteur dans les trois directions, ce qui est obtenu par la présence d'ondulations ou de coudes dans la partie centrale du raccord qui va travailler en traction/compression/ cisaillement et se déformer en conséquence en entraînant également la transmission d'efforts à la caisse du véhicule.

Ces raccords sont fabriqués à l'heure actuelle en utilisant le plus souvent :
- soit une technique de confection, comprenant par exemple un calandrage des couches de caoutchouc sous forme de feuilles ou sur le renfort textile, puis une solidarisation de ces couches par enroulement radial,
- soit une technique de co-extrusion permettant l'obtention successive de deux couches de caoutchouc, puis de trois couches caoutchouc/ caoutchouc/ textile et enfin de la structure multicouches finale caoutchouc / caoutchouc / textile / caoutchouc.

Généralement, la couche radialement interne est à base d'un élastomère choisi dans les familles des fluorosilicones, des fluorocarbonés (FKM), des copolymères d'un acrylate (ACM) et des copolymères d'éthylène et d'un acrylate (AEM), pour résister à la température du mélange air-huile et à l'agressivité de l'huile contenue dans le mélange. La couche radialement externe est quant à elle à base de caoutchouc silicone ou d'un élastomère ACM ou AEM, pour résister à l'environnement extérieur dans le lequel se situe le raccord. A l'heure actuelle, pour une structure évoluant à 200° C , les élastomères fluorocarbonés FKM sont privilégiés pour la couche interne, et le caoutchouc silicone est préféré pour la couche externe.

Afin d'assurer la cohésion entre ces deux couches élastomères, on réticule l'élastomère FKM au moyen d'un système de réticulation au peroxyde comprenant, outre le peroxyde initiant la réaction de pontage chimique des chaînes macromoléculaires de l'élastomère, au moins un co-agent de type polyinsaturé réagissant avec ce peroxyde afin d'obtenir la réaction de réticulation voulue qui forme des ponts entre ces chaînes constitués d'un enchaînement de liaisons covalentes carbone-carbone et carbone-azote.

A titre de co-agents de réticulation au peroxyde, on utilise le plus souvent les composés suivants pour les couches internes de raccords souples, selon des quantités comprises entre 0,5 pce et 10 pce (pce : parties en poids pour cent parties d'élastomère) :
triallyl cyanurate (TAC), triallyl isocyanurate (TAIC, le plus utilisé à ce jour), tris(diallylamine-s-triazine), triallyl phosphite, hexaallyl phosphoramide, N,N-diallyl acrylamide, N,N,N',N'-tetraallyl téréphthalamide, N,N,N',N'-tetraallyl malonamide, trivinyl isocyanurate, 2,4,6-trivinylméthyltrisiloxane, et tri(5-norbornène-2-méthylène) cyanurate.

Le document EP-A2-947 757 présente une structure multicouches de tuyau résistant à des températures élevées, dont la couche interne comprend un mélange d'élastomères fluorocarboné (FKM) et acrylique (ACM) réticulé à l'aide de TAIC et dont la couche externe est par exemple à base de ces mêmes élastomères et est collée sur une couche intermédiaire de renforcement.

Le document EP-A1-1 396 670 décrit un tuyau de structure multicouches comportant une couche interne constitué d'un élastomère fluorocarboné (FKM) comprenant un système de réticulation par un peroxyde et un co-agent de réticulation de type phénolique, une couche intermédiaire d'enduction à base d'un élastomère silicone réticulé par un peroxyde, une couche textile de renforcement et une couche externe à base d'un élastomère silicone Ce tuyau est utilisé dans un système d'admission d'air dans un moteur de véhicule automobile.

Un inconvénient majeur des couches internes de raccords souples incorporant ces co-agents de réticulation au peroxyde réside dans le phénomène de vieillissement des matériaux élastomères précités qui a lieu à des températures d'utilisation supérieures à 200° C. Dans le cas d'un élastomère fluorocarboné, ce vieillissement thermique est notamment caractérisé par un phénomène de dégradation de l'élastomère analogue à une « dévulcanisation », qui s'accompagne notamment d'une variation importante de l'allongement à la rupture du matériau fluorocarboné lors de son vieillissement aérobie à ces températures élevées. Généralement, au début du vieillissement, cette dégradation est marquée par une forte augmentation de la valeur d'allongement à la rupture et, parallèlement, par une diminution de la valeur de la contrainte à la rupture de ce matériau. Ce mécanisme s'explique par les faibles énergies qui caractérisent les liaisons carbone-carbone et carbone-azote issues de la réticulation, lesquelles liaisons se rompent en partie lors de ce vieillissement.

Un but de la présente invention est de remédier à cet inconvénient, et il est atteint en ce que la Demanderesse vient de découvrir d'une manière surprenante que l'incorporation à une composition de caoutchouc à base d'au moins un élastomère fluorocarboné spécifiquement FKM (et pas FFKM) et comprenant un système de réticulation par un peroxyde, d'un ou de plusieurs co-agent(s) de réticulation qui est ou sont chacun une dioléfine fluorée appartenant à la famille des composés divinylperfluoroaliphatiques, permet d'obtenir une structure multicouches à symétrie de révolution qui est apte à véhiculer un fluide gazeux, tel que de l'air chargé d'huile, à une température et à une pression respectivement supérieures à 200° C et à 1 bar, qui présente une résistance améliorée au vieillissement thermique généré par cette température en comparaison des couches internes connues pour ces structures qui comprennent des co-agents de réticulation d'un autre type, et qui permet de se passer de couche intermédiaire d'enduction en caoutchouc pour faire adhérer la couche externe de la structure multicouches à sa couche interne, grâce à la présence de la ou de chaque dioléfine fluorée dans la composition de la couche interne.

Par incorporation « d'un ou de plusieurs co-agent(s) de réticulation qui est ou sont chacun une dioléfine fluorée », on entend selon la présente invention que cette composition de caoutchouc peut au choix comprendre une seule dioléfine fluorée à titre d'unique co-agent de réticulation, ou bien un mélange de dioléfines fluorées constituant autant de co-agents de réticulation. En d'autres termes, le système de réticulation de la composition de l'invention est dépourvu de co-agent(s) d'un autre type, même utilisé(s) en mélange avec une dioléfine fluorée, comme décrit dans le document WO-A-2007/103318 qui enseigne de mélanger un co-agent selon l'art antérieur précité (e.g. un TAIC) à une dioléfine fluorée pour réticuler au peroxyde un élastomère FKM afin d'améliorer le démoulage de la composition à l'état non réticulé, ce qui n'a rien à voir avec le vieillissement thermique de la composition de l'invention qui se pose à l'état réticulé de celle-ci.

Le document EP-A1-1 632 526 décrit une composition de caoutchouc à base d'au moins un élastomère perfluorocarboné et comprenant un système de réticulation par un peroxyde et un co-agent de réticulation étant une dioléfine fluorée appartenant à la famille des composés dvinylperfluoroaliphatiques. Cette composition présente une bonne résistance au vieillissement thermique, en termes de propriétés mécaniques, après exposition à 360°C pendant 70 heures. Aucune structure multicouches n'est décrite dans ce document.

On notera que la composition de caoutchouc selon l'invention incorporant une dioléfine fluorée pour le ou chaque co-agent de réticulation permet avantageusement d'augmenter l'énergie de liaison des ponts de réticulation précités, ce qui procure un allongement à la rupture sensiblement constant de la composition réticulée après un vieillissement thermique, même à des températures très supérieures à 200° C pouvant aller jusqu'à 300° C. Il en résulte que la structure multicouches, telle qu'un raccord souple de découplage entre un turbocompresseur et un refroidisseur d'air de suralimentation, qui incorpore cette composition dans sa couche interne, présente des propriétés mécaniques ayant une stabilité dans le temps améliorée en comparaison de celles des structures connues à base du même élastomère FKM mais dont la couche interne comprend un autre co-agent de réticulation au peroxyde.

Ainsi, une structure multicouches selon l'invention comporte :
- une couche radialement interne étanche, apte à résister à l'agressivité du fluide et constituée d'une composition de caoutchouc à base d'au moins un FKM comprenant un système de réticulation par un peroxyde qui comprend au moins un co-agent de réticulation,
- une couche de renforcement surmontant ladite couche interne, de préférence à base d'un renfort textile, et
- au moins une couche radialement externe qui est apte à résister à l'environnement extérieur de la structure,
et cette structure est caractérisée en ce que le ou chaque co-agent est une dioléfine fluorée appartenant à la famille des composés divinylperfluoroaliphatiques et en ce que la couche externe est à base d'au moins un élastomère silicone, de telle sorte que la structure soit dépourvue de couche intermédiaire d'enduction en caoutchouc pour faire adhérer cette couche externe à cette couche interne.

De préférence, ledit ou chaque co-agent est un divinylperfluoroalcane dont le groupe alkyl présente de 2 à 12 atomes de carbone.

A titre encore plus préférentiel, ce système de réticulation comprend ledit divinylperfluoroalcane à titre d'unique co-agent de réticulation, ledit groupe alkyl présentant de 6 à 12 atomes de carbone.

Avantageusement, ledit ou l'un au moins desdits co-agent(s) est le 1,6-divinylperfluorohexane et, encore plus avantageusement, le système de réticulation selon l'invention comprend le 1,6-divinylperfluorohexane à titre d'unique co-agent de réticulation.

On notera toutefois que d'autres divinylperfluoroalcanes sont utilisables dans ce système de réticulation selon l'invention, comme par exemple le 1,8-divinylperfluorooctane, à titre non limitatif.

Selon un mode préférentiel de réalisation de l'invention, ledit ou chaque élastomère fluorocarboné présente un taux massique de fluor inclusivement compris entre 66 % et 72 %, cet élastomère pouvant avantageusement être un copolymère essentiellement issu de fluorure de vinylidène, de tétrafluoroéthylène et d'hexafluoropropylène.

Avantageusement, cette composition comprend en outre une charge renforçante qui est exclusivement ou majoritairement constituée (i.e. à base) de noir de carbone.

Egalement avantageusement en relation avec le taux précité de fluor dans ledit ou chaque élastomère, la composition de caoutchouc de la couche interne selon l'invention peut comprendre le(s)dit(s) co-agent(s) de réticulation selon une quantité inclusivement comprise entre 1 pce et 6 pce (pce : parties en poids pour cent parties d'élastomère(s), cette quantité étant de préférence comprise, notamment dans le cas d'un unique co-agent constitué de 1,6-divinylperfluorohexane :
- entre 1 et 3 pce, pour une quantité de charge renforçante inférieure à 15 pce et pour un taux massique de fluor dans ledit ou chaque élastomère compris entre 66 et 69 %, ou bien
- entre 1 à 6 pce, pour une quantité de charge renforçante supérieure à 15 pce et/ou pour un taux massique de fluor dans ledit ou chaque élastomère compris entre 66 et 69 %.

Avantageusement, le peroxyde utilisé dans le système de réticulation selon l'invention peut être un peroxyde organique présent dans la composition selon une quantité de préférence comprise entre 5 pce et 12 pce Tous les peroxydes organiques utilisés à ce jour comme initiateurs de systèmes de réticulation sont utilisables, comme par exemple un peroxyde de benzoyle, un butylperoxyde, le 2,5-diméthyl-2,5-bis(tert-butyl peroxyde) hexane, le bis(ortho-méthylbenzoyl) peroxyde, le bis(meta-méthylbenzoyl)peroxyde, le bis(para-méthylbenzoyl)peroxyde, le monométhylbenzoyl peroxyde, le bis(2,4-diméthylbenzoyl)peroxyde, le diméthylbenzoyl peroxyde, le bis(2,4,6-triméthylbenzoyl)peroxyde ou le triméthylbenzoyl peroxyde.

On notera que les compositions de caoutchouc conformes à l'invention peuvent comprendre également, outre le(s)dit(s) élastomères fluorocarboné(s), ledit système de réticulation et ladite charge renforçante, tout ou partie des autres ingrédients ou additifs habituellement utilisés dans les couches internes de raccords souples de découplage tels que, à titre non limitatif, des agents de mise en oeuvre et des charges diluantes.

Selon une autre caractéristique de l'invention, le renfort textile de préférence utilisé pour la couche de renforcement peut par exemple être formé, à titre non limitatif, d'un tricot comportant des fils à base d'aramide, de meta aramide (par exemple commercialisée par la société Dupont sous la dénomination « Nomex »), de para aramide (par exemple de dénomination « Kevlar » ou « Twaron ») ou de copolymères (par exemple de dénomination « Technora »), ou un mélange de fibres résistant à des hautes températures (le terme « fil » désignant ici de manière connue aussi bien un filé à base d'une multitude de filaments élémentaires de faible diamètre qui sont tordus ensemble, qu'un retors obtenu par torsion de plusieurs filés).

Selon une autre caractéristique de l'invention, cette structure multicouches peut former ledit raccord souple de découplage en présentant une partie axialement centrale ondulée et/ou coudée se terminant axialement par deux extrémités de raccordement audit système d'admission d'air, ce raccord étant apte à supporter l'ensemble des débattements tridimensionnels dudit turbocompresseur.

Avantageusement, cette structure multicouches peut former alors un soufflet présentant une pluralité de crêtes séparées deux à deux entre elles par des creux, de sorte à former des ondulations périphériques faisant saillie radialement vers l'extérieur.

Un système d'admission d'air selon l'invention pour un moteur à turbocompresseur de véhicule automobile, comporte un refroidisseur d'air de suralimentation dont l'entrée est reliée à la sortie du turbocompresseur et dont la sortie est reliée à un collecteur d'admission d'air du moteur, ce refroidisseur étant fixé au châssis du véhicule et étant raccordé au turbocompresseur par un raccord souple de découplage. Selon l'invention, ce raccord est constitué d'une structure multicouches telle que définie ci-dessus.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure 1 est une vue schématique d'un système d'admission d'air selon l'invention d'un moteur à turbocompresseur, ce système comprenant notamment un refroidisseur d'air entre la sortie turbo et l'entrée du collecteur d'admission d'air du moteur,
la figure 2 est une vue en coupe axiale d'un raccord souple de découplage selon un exemple de l'invention qui est monté en entrée ou en sortie du refroidisseur d'air de la figure 1, et
la figure 3 est une vue en perspective du raccord de découplage de la figure 2.

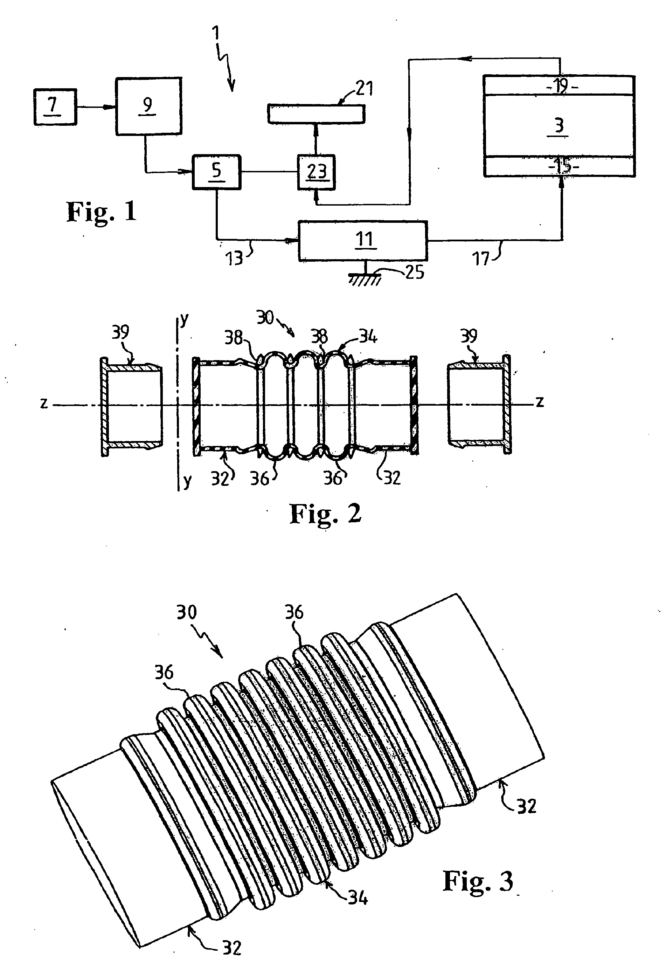

Un système d'admission d'air 1, connu en soi, pour un moteur 3 à turbocompresseur 5 est schématiquement illustré à la figure 1.

Ce système d'admission d'air 1 comprend notamment une prise d'air 7 reliée à l'entrée d'un filtre à air 9 dont la sortie est connectée à l'entrée du turbocompresseur 5, un refroidisseur d'air de suralimentation 11 dont l'entrée est reliée à la sortie du turbocompresseur 5 par une tubulure d'entrée de raccordement 13 et dont la sortie est reliée au collecteur d'admission d'air 15 du moteur 3 par une tubulure de sortie de raccordement 17. Le collecteur d'échappement 19 du moteur 3 est relié au conduit d'échappement 21 avec une boîte de raccordement 23, pour prélever une partie des gaz d'échappement nécessaire à l'alimentation du turbocompresseur 5.

Les tubulures de raccordement 13 et 17 situées de part et d'autre du refroidisseur d'air 11 sont généralement constituées par des tubulures métalliques, avec la présence de raccords de découplage tels que des soufflets, lesquels peuvent être respectivement montés à l'entrée et à la sortie du refroidisseur d'air 11 qui est une pièce fixée à la caisse 25 du véhicule.

Le raccord de découplage 30 illustré aux figures 2 et 3 est de type soufflet, comprenant deux parties d'extrémité de raccordement 32 et une partie centrale 34 présentant des ondulations 36 avec la présence d'anneaux métalliques de maintien 38 situés dans les creux des ondulations 36.

Pour le raccordement du raccord 30, on prévoit deux embouts métalliques 39 qui sont respectivement engagés dans les deux parties d'extrémité 32 du raccord 30 et fixés par des colliers de serrage (non représentés).

La partie centrale de ce raccord souple 30, qui fait l'objet de la présente invention, comprend :
- une couche radialement interne étanche et résistante à l'agressivité du mélange d'air et d'huile à des températures excédant 200° C,
- une couche intermédiaire de renforcement par exemple de type tricot textile, et
- une couche radialement externe de protection résistant à l'environnement extérieur dans lequel se situe ce raccord.

### Premier exemple de réalisation d'une couche interne selon l'invention pour le raccord souple 30, en comparaison d'une couche interne « témoin » :

On a préparé deux compositions de caoutchouc C1 et C2 qui sont chacune aptes à constituer cette couche interne du raccord souple 30, et dont l'une C1 correspond à l'état de l'art antérieur exposé en préambule (composition « témoin » avec un unique co-agent de réticulation constitué de TAIC), alors que l'autre composition C2 est conforme à l'invention du fait qu'elle comprend une dioléfine fluorée (« DOF » en abrégé ci-dessous) constituée de 1,6-divinylperfluorohexane à titre d'unique co-agent de réticulation.

On a notamment utilisé pour chaque composition C1 et C2 :
- un seul et même élastomère fluorocarboné de dénomination commerciale « Tecnoflon P 459 » constitué d'un copolymère de fluorure de vinylidène, tétrafluoroéthylène et hexafluoropropylène et présentant un taux massique de fluor d'environ 71 %, et
- un même peroxyde organique « Varox DBPH 50 » constitué de 2,5-diméthyl-2,5-bis(tert-butyl peroxyde).

Le tableau 1 ci-dessous recense la formulation utilisée à titre d'exemple pour chaque composition C1 et C2, exprimée en pce (parties en poids pour cent parties d'élastomère).

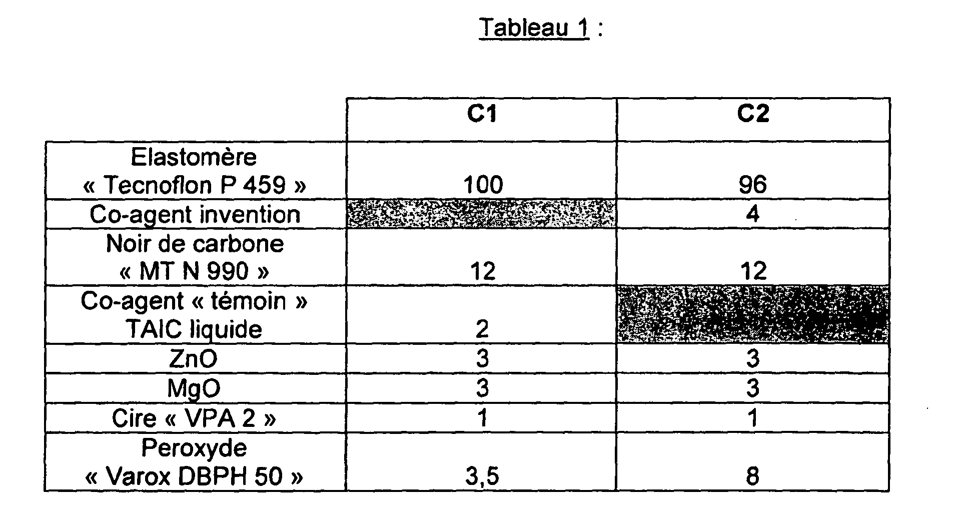

On a fabriqué des raccords souples « témoin » et selon l'invention présentant chacun la forme de soufflet 30 illustrée à la figure 3 et dont la couche interne était constituée de l'une ou l'autre des compositions C1 et C2, les autres couches de ces raccords étant identiques (un même renfort textile constitué dans cet exemple de « Nomex » de titre 1780 dTex ayant été utilisé dans la couche intermédiaire et une même composition de caoutchouc ayant été utilisée dans la couche externe, cette composition étant à base d'un élastomère silicone « Silastic GP700 » (commercialisé par Dow Corning) et comprenant 1,5 pce de « Varox DBPH 50 » pour 100 pce d'élastomère), à ceci près que le raccord selon l'invention est avantageusement dépourvu de couche d'enduction entre ces couches interne et externe, comme cela sera expliqué ci-après.

On a par ailleurs soumis des éprouvettes de type haltère H2 constituées de ces compositions C1 et C2 à des essais de vieillissement thermique en les plaçant en étuve ventilée dans un flux d'air chaud mélangé à de l'huile à une température de 225° C pendant des durées variant de 7 jours à 42 jours, et les mesures ont été effectuées selon la norme NFT 46-002 pour les propriétés mécaniques. Le tableau 2 ci-après indique les résultats de vieillissement obtenus pour ces éprouvettes « témoin » et selon l'invention, en termes d'allongement à la rupture.

**Tableau 2 :**

| **Allongement à la rupture Ar (%)** | | **Eprouvette C1** | **Eprouvette C2** |
|---|---|---|---|
| Etat initial : Ar₀ mesurée | | 245 | 325 |
| 7 jours à 225° C | Ar mesurée | 240 | 265 |
| | Variation (Ar-Ar₀)/Ar₀ | -2 % | -18 % |
| 21 jours à 225° C | Ar mesurée | 335 | 320 |
| | variation (Ar-Ar₀)/Ar₀ | 37 % | -1 % |
| 42 jours à 225° C | Ar mesurée | 335 | 305 |
| | Variation (Ar-Ar₀)/Ar₀ | 37 % | -6 % |

Ce tableau montre que l'utilisation du co-agent de type dioléfine fluorée selon l'invention pour réticuler la composition de caoutchouc C2 procure un allongement à la rupture sensiblement constant de cette composition C2 après un vieillissement thermique de longue durée à une température nettement supérieure à 200° C. Il en résulte qu'un raccord souple de découplage 30 selon l'invention qui incorpore cette composition C2 dans sa couche interne présente des propriétés mécaniques plus stables dans le temps que celles des raccords « témoin » dont la couche interne utilise un autre co-agent, tel que le TAIC.

Comme indiqué précédemment, le co-agent de type dioléfine fluorée selon l'invention permet en outre de s'affranchir de la dépose d'une couche d'enduction entre les deux couches interne et externe du raccord souple respectivement à base dudit élastomère fluoré et dudit élastomère silicone, sans pénaliser la qualité de l'adhésion initiale entre ces deux couches. En effet, des essais de traction réalisés sur les raccords précités « témoin » (à couche interne constituée de la composition C1) et selon l'invention (à couche interne constituée de la composition C2), réalisés selon la méthode de pelage décrite dans la norme NFT 46-008, ont conduit à l'obtention de forces d'arrachement de même intensité entre la couche externe à base dudit élastomère silicone et chacune de ces couches internes (cette force d'arrachement était d'environ 2,5 N/mm).

### Second exemple de réalisation d'une couche interne selon l'invention pour le raccord souple, en comparaison d'une couche interne « témoin » :

On a préparé deux compositions de caoutchouc C3 et C4 pour la couche interne du raccord souple 30, dont l'une C3 correspond à l'art antérieur exposé en préambule (composition « témoin » avec un unique co-agent de réticulation constitué de TAIC), alors que l'autre C4 est conforme à l'invention du fait qu'elle comprend une dioléfine fluorée constituée de 1,6-divinylperfluorohexane à titre d'unique co-agent de réticulation.

On a notamment utilisé pour chaque composition C3 et C4 :
- un seul et même élastomère fluorocarboné de dénomination commerciale « Tecnoflon P 757 », et
- le même peroxyde organique « Varox DBPH 50 ».

Le tableau 3 ci-dessous recense la formulation utilisée à titre d'exemple pour chaque composition C3 et C4, exprimée en pce (parties en poids pour cent parties d'élastomère).

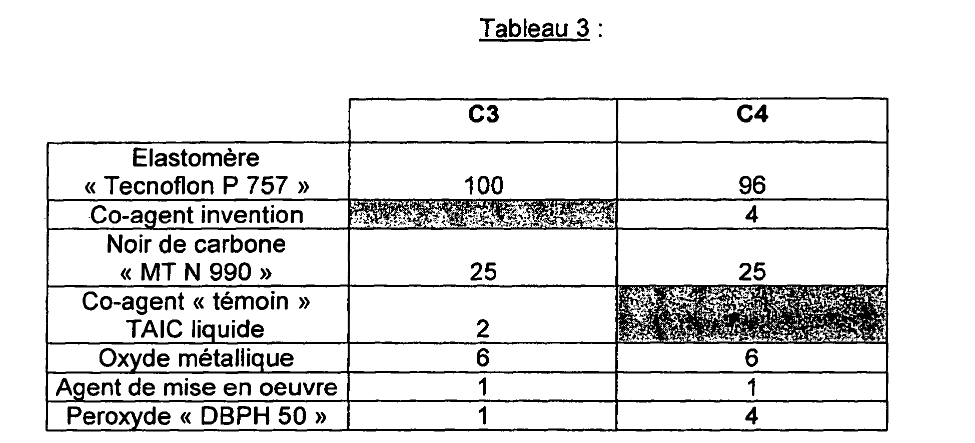

On a soumis des éprouvettes de type haltère H2 constituées de ces compositions C3 et C4 à des essais d'allongement à la rupture mesurés selon la norme ISO 37, d'une part, à température ambiante (23° C) et, d'autre part, à chaud (185° C).

**Tableau 4 :**

| | **Eprouvette C3** | **Eprouvette C4** |
|---|---|---|
| Allongement rupture Ar (%) à 23° C | 320 | 340 |
| Allongement rupture Ar (%) à 185° C | 98 | 167 |

Ce tableau montre que l'utilisation du co-agent de type dioléfine fluorée selon l'invention pour réticuler la composition de couche interne C4 procure des performances mécaniques améliorées à température élevée, comparées à celles procurées par le co-agent usuel TAIC.

En effet, pour quasiment le même niveau d'allongement rupture à l'état initial mesuré à 23° C, on a une perte nettement moindre pour l'éprouvette C4 de l'invention à l'état final de 185° C (perte de -50 % contre - 69 % pour l'éprouvette témoin C3). De plus, pour ce seul état final de 185° C, l'allongement rupture résiduel de l'éprouvette C4 est supérieur en valeur absolue de 69 % à celui de l'éprouvette C3.

## Revendications

1. Structure multicouches (30) à symétrie de révolution qui est apte à véhiculer un fluide gazeux, tel que de l'air chargé d'huile, à une température et à une pression respectivement supérieures à 200° C et à 1 bar, et qui est en particulier destinée à former un raccord tubulaire souple de découplage (30) pour un système d'admission d'air (1) dans un moteur (3) à turbocompresseur (5) d'un véhicule automobile, cette structure comportant :
- une couche radialement interne qui est étanche et apte à résister à l'agressivité dudit fluide et qui est constituée d'une composition de caoutchouc, laquelle est à base d'au moins un élastomère fluorocarboné (FKM) et comprend un système de réticulation par un peroxyde qui comprend au moins un co-agent de réticulation,
- une couche de renforcement surmontant ladite couche interne, de préférence à base d'un renfort textile, et
- au moins une couche radialement externe qui est apte à résister à l'environnement extérieur de la structure,
**caractérisée en ce que** ledit ou chaque co-agent de réticulation est une dioléfine fluorée appartenant à la famille des composés divinylperfluoroaliphatiques et **en ce que** la couche externe est à base d'au moins un élastomère silicone, de telle sorte que ladite structure soit dépourvue de couche intermédiaire d'enduction en caoutchouc pour faire adhérer cette couche externe à cette couche interne.

2. Structure multicouches (30) selon la revendication 1, **caractérisée en ce que** ledit ou chaque co-agent est un divinylperfluoroalcane dont le groupe alkyl présente de 2 à 12 atomes de carbone.

3. Structure multicouches (30) selon la revendication 2, **caractérisée en ce que** ledit système de réticulation comprend ledit divinylperfluoroalcane à titre d'unique co-agent de réticulation, ledit groupe alkyl présentant de 6 à 12 atomes de carbone.

4. Structure multicouches (30) selon la revendication 2 ou 3, **caractérisée en ce que** ledit ou l'un au moins desdits co-agent(s) est le 1,6-divinylperfluorohexane.

5. Structure multicouches (30) selon une des revendications précédentes, **caractérisée en ce que** ledit ou chaque élastomère fluorocarboné présente un taux massique de fluor inclusivement compris entre 66 % et 72 %.

6. Structure multicouches (30) selon la revendication 5, **caractérisée en ce que** ladite composition comprend le(s)dit(s) co-agent(s) de réticulation selon une quantité inclusivement comprise entre 1 pce et 6 pce (pce : parties en poids pour cent parties d'élastomère(s)).

7. Structure multicouches (30) selon une des revendications précédentes, **caractérisée en ce que** ladite composition comprend en outre une charge renforçante à base de noir de carbone.

8. Structure multicouches (30) selon les revendications 6 et 7, **caractérisée en ce que** ladite composition comprend le(s)dit(s) co-agent(s) de réticulation selon une quantité comprise :
- entre 1 et 3 pce, pour une quantité de charge renforçante inférieure à 15 pce et pour un taux massique de fluor dans ledit ou chaque élastomère compris entre 66 et 69 %, ou bien
- entre 1 à 6 pce, pour une quantité de charge renforçante supérieure à 15 pce et/ou pour un taux massique de fluor dans ledit ou chaque élastomère compris entre 66 et 69 %.

9. Structure multicouches (30) selon une des revendications précédentes, **caractérisée en ce que** ledit ou chaque élastomère fluorocarboné est un copolymère essentiellement issu de fluorure de vinylidène, de tétrafluoroéthylène et d'hexafluoropropylène.

10. Structure multicouches (30) selon une des revendications précédentes, **caractérisée en ce que** ledit peroxyde est un peroxyde organique qui est présent dans ladite composition selon une quantité de préférence comprise entre 5 pce et 12 pce (pce : parties en poids pour cent parties d'élastomère(s)).

11. Structure multicouches (30) selon une des revendications précédentes, **caractérisée en ce qu'**elle forme ledit raccord souple de découplage (30) en présentant une partie axialement centrale (34) ondulée et/ou coudée se terminant axialement par deux extrémités de raccordement (32) audit système d'admission d'air (1), ce raccord étant apte à supporter l'ensemble des débattements tridimensionnels dudit turbocompresseur (5).

12. Structure multicouches (30) selon la revendication 11, **caractérisée en ce qu'**elle forme un soufflet (30) présentant une pluralité de crêtes séparées deux à deux entre elles par des creux, de sorte à former des ondulations périphériques (36) faisant saillie radialement vers l'extérieur.

13. Système d'admission d'air (1) dans un moteur (3) à turbocompresseur (5) d'un véhicule automobile, ce système comportant un refroidisseur d'air de suralimentation (11) dont l'entrée est reliée à la sortie du turbocompresseur et dont la sortie est reliée à un collecteur d'admission d'air (15) du moteur, ce refroidisseur étant fixé au châssis du véhicule et étant raccordé au turbocompresseur par un raccord souple de découplage (30), **caractérisé en ce que** ce raccord est constitué d'une structure multicouches telle que définie à l'une des revendications précédentes.

## Claims

1. Multi-layered structure (30) symmetrical in revolution, suitable for conveying a gaseous fluid, such as air entraining oil, at a temperature and a pressure in excess of 200° C and 1 bar respectively, and which is designed in particular to form a flexible tubular decoupling connection (30) for an air intake system (1) in an engine (3) of an automotive vehicle with a turbocharger (5), this structure comprising:
- a radially inner layer which is impermeable and designed to withstand the aggressive nature of said fluid and which is made from a rubber composition, which composition is based on at least one fluorocarbon elastomer (FKM) and comprises a cross linking system by a peroxide containing at least one cross-linking co-agent,
- a reinforcing layer on top of said inner layer, preferably with a textile reinforcing base, and
- at least one radially outer layer which is designed to withstand the environment outside the structure,
**characterised in that** said or each cross-linking co-agent is a fluorinated diolefin belonging to the family of divinylperfluoro-aliphatic compounds and **in that** the outer layer is based on at least one silicone elastomer, so that said structure is devoid of any intermediate rubber coating layer to adhere this outer layer to this inner layer.

2. Multilayered structure (30) as claimed in claim 1, **characterised in that** said or each co-agent is a divinylperfluoro-alkane, the alkyl group of which has 2 to 12 carbon atoms.

3. Multilayered structure (30) as claimed in claim 2, **characterised in that** said cross-linking system contains said divinylperfluoro-alkane as the sole cross-linking agent, said alkyl group having 6 to 12 carbon atoms.

4. Multilayered structure (30) as claimed in claim 2 or 3, **characterised in that** said or at least one of said co-agent(s) is 1,6-divinylperfluoro-hexane.

5. Multilayered structure (30) as claimed in one of the preceding claims, **characterised in that** said or each fluorocarbon elastomer contains a percentage by weight of fluorine of between 66 % and 72 % inclusive.

6. Multilayered structure (30) as claimed in claim 5, **characterised in that** said composition contains said cross-linking co-agent(s) in a quantity ranging between 1 pce and 6 pce inclusive (pce: parts by weight per hundred parts of elastomer(s)).

7. Multilayered structure (30) as claimed in one of the preceding claims, **characterised in that** said composition further comprises a reinforcing filler based on carbon black.

8. Multilayered structure (30) as claimed in claims 6 and 7, **characterised in that** said composition contains said cross-linking co-agent(s) in a quantity ranging:
- between 1 and 3 pce, for a quantity of reinforcing filler of less than 15 pce and for a percentage by weight of fluorine in said or each elastomer ranging between 66 and 69%, or
- between 1 and 6 pce, for a quantity of reinforcing filler greater than 15 pce and/or for a percentage by weight of fluorine in said or each elastomer ranging between 66 and 69 %.

9. Multilayered structure (30) as claimed in one of the preceding claims, **characterised in that** said or each fluorocarbon elastomer is a copolymer essentially derived from vinylidene fluoride, tetrafluoroethylene fluoride and hexafluoropropylene fluoride.

10. Multilayered structure (30) as claimed in one of the preceding claims, **characterised in that** said peroxide is an organic peroxide which is contained in said composition in a quantity preferably ranging between 5 pce and 12 pce (pce: parts by weight per hundred parts of elastomer(s)).

11. Multilayered structure (30) as claimed in one of the preceding claims, **characterised in that** it forms said flexible decoupling connection (30) by comprising an axially central corrugated and/or bent part (34) axially terminated by two ends (32) connecting to said air intake system (1), this connection being designed to withstand all the three-dimensional displacements of said turbocharger (5).

12. Multilayered structure (30) as claimed in claim 11, **characterised in that** it constitutes a bellows (30) comprising a plurality of peaks separated from one another by alternating troughs so as to form peripheral corrugations (36) projecting radially outwards.

13. Air intake system (1) in an engine (3) of an automotive vehicle with a turbocharger (5), this system comprising a supercharge air cooler (11), the inlet of which is connected to the outlet of the turbocharger and the outlet of which is connected to an intake manifold (15) of the engine, this cooler being mounted on the chassis of the vehicle and being connected to the turbocharger by a flexible decoupling connection (30), **characterised in that** this connection is made up of a multilayered structure as defined in one of the preceding claims.

## Patentansprüche

1. Mehrschichtenstruktur (30) mit Rotationssymmetrie, die ein gasförmiges Fluid befördern kann, wie zum Beispiel Luft, die mit Öl geladen ist, mit einer Temperatur und bei einem Druck, die jeweils größer sind als 200 °C und 1 bar, und die insbesondere dazu bestimmt ist, einen röhrenförmigen biegsamen Anschluss zum Abkoppeln (30) für ein Lufteinlasssystem (1) in einen Motor (3) mit Turbolader (5) eines Kraftfahrzeugs zu bilden, wobei diese Struktur Folgendes aufweist:
- eine radial interne Schicht, die dicht ist und der Aggressivität des Fluids standhalten kann, und die aus einer Zusammensetzung aus Kautschuk besteht, die auf mindestens einem fluorkohlenstoffhaltigen Elastomer (FKM) beruht und ein Vernetzungssystem durch ein Peroxid aufweist, das mindestens ein Vernetzungshilfsmittel enthält,
- eine Verstärkungsschicht auf der internen Schicht, vorzugsweise auf der Grundlage einer Textilverstärkung und
- mindestens eine radial äußere Schicht, die der Außenumgebung der Struktur standhalten kann,
**dadurch gekennzeichnet, dass** das oder jedes Vernetzungshilfsmittel ein fluorhaltiges Diolefin ist, das zu der Familie der divinylperfluoraliphatischen Verbindungen gehört, und dass die externe Schicht auf der Basis mindestens eines Silikonelastomers besteht, so dass die Struktur keine Beschichtungzwischenschicht aus Kautschuk hat, um diese externe Schicht an dieser internen Schicht haften zu lassen.

2. Mehrschichtenstruktur (30) nach Anspruch 1, **dadurch gekennzeichnet, dass** das oder jedes Hilfsmittel ein Divinylperfluoralcan ist, dessen Alkylgruppe 2 bis 12 Kohlenstoffatome aufweist.

3. Mehrschichtenstruktur (30) nach Anspruch 2, **dadurch gekennzeichnet, dass** das Vernetzungssystem das Divinylperfluoralcan als einziges Vernetzungshilfsmittel aufweist, wobei die Alkylgruppe 6 bis 12 Kohlenstoffatome aufweist.

4. Mehrschichtenstruktur (30) nach Anspruch 2 oder 3, **dadurch gekennzeichnet, dass** das oder mindestens eines der Hilfsmittel 1,6-Divinylperfluorhexan ist.

5. Mehrschichtenstruktur (30) nach einem der vorhergehenden Ansprüche, **dadurch gekennzeichnet, dass** das oder jedes fluorkohlenstoffhaltige Elastomer ein Massenverhältnis an Fluor inklusive zwischen 66 % und 72 % aufweist.

6. Mehrschichtenstruktur (30) nach Anspruch 5, **dadurch gekennzeichnet, dass** die Zusammensetzung das/die Vernetzungshilfsmittel in einer Menge inklusive zwischen 1 pce und 6 pce aufweist (pce: Gewichtsteile für einhundert Elastomerteile).

7. Mehrschichtenstruktur (30) nach einem der vorhergehenden Ansprüche, **dadurch gekennzeichnet, dass** die Zusammensetzung ferner eine verstärkende Füllung auf der Grundlage von Rußschwarz aufweist.

8. Mehrschichtenstruktur (30) nach den Ansprüchen 6 und 7, **dadurch gekennzeichnet, dass** die Zusammensetzung das/die Vernetzungshilfsmittel gemäß einer Menge aufweist zwischen:
- 1 und 3 pce für eine Menge an verstärkender Füllung kleiner als 15 pce und für ein Massenverhältnis an Fluor in dem oder in jedem Elastomer zwischen 66 und 69 % oder
- 1 bis 6 pce für eine Menge an verstärkender Füllung größer als 15 pce und/oder für ein Massenverhältnis an Fluor in dem oder in jedem Elastomer zwischen 66 und 69 %.

9. Mehrschichtenstruktur (30) nach einem der vorhergehenden Ansprüche, **dadurch gekennzeichnet, dass** das oder jedes fluorkohlenstoffhaltige Elastomer ein Copolymer ist, das im Wesentlichen aus Vinylidenfluorid, Tetrafluorethylen und Hexafluorpropylen hervorgeht.

10. Mehrschichtenstruktur (30) nach einem der vorhergehenden Ansprüche, **dadurch gekennzeichnet, dass** das Peroxid ein organisches Peroxid ist, das in der Zusammensetzung in einer Menge vorhanden ist, die vorzugsweise zwischen 5 pce und 12 pce liegt (pce: Gewichtsteile für einhundert Elastomerteile).

11. Mehrschichtenstruktur (30) nach einem der vorhergehenden Ansprüche, **dadurch gekennzeichnet, dass** sie den biegsamen Anschluss zum Abkoppeln (30) bildet und einen welligen und/oder abgebogenen axial zentralen Teil (34) aufweist, der in zwei Enden (32) zum Anschließen an das Lufteinlasssystem (1) axial endet, wobei dieser Anschluss sämtlichen dreidimensionalen Ausschlägen des Turboladers (5) standhalten kann.

12. Mehrschichtenstruktur (30) nach Anspruch 11, **dadurch gekennzeichnet, dass** sie einen Balg (30) bildet, der mehrere Grate aufweist, die derart untereinander in Paaren durch Vertiefungen getrennt sind, dass periphere Wellungen (36) gebildet werden, die radial nach außen vorstehen.

13. System (1) zum Einlassen von Luft in einen Motor (3) mit Turbolader (5) eines Kraftfahrzeugs, wobei dieses System einen Turbolader-Luftkühler (11) aufweist, dessen Eingang mit dem Ausgang des Turboladers verbunden ist, und dessen Ausgang mit einem Luftsammlereinlass (15) des Motors verbunden ist, wobei dieser Kühler an dem Fahrgestell des Fahrzeugs befestigt und an den Turbolader durch einen biegsamen Anschluss zum Abkoppeln (30) angeschlossen ist, **dadurch gekennzeichnet, dass** dieser Anschluss aus einer Mehrschichtenstruktur besteht, wie sie in einem der vorhergehenden Ansprüche definiert ist.
